# EUROPEAN PATENT SPECIFICATION

(11) **EP 2 088 743 B1**
(45) Date of publication and mention of the grant of the patent: **03.07.2013**
(21) Application number: 08425080.2
(22) Date of filing: 11.02.2008
(51) Int. Cl.: H04L 29/06

(54) **Digital file locker**
Digitale Dateisperrung
Verrouillage de fichier numérique

(43) Date of publication of application: 12.08.2009
(73) Proprietor: Accenture Global Services Limited, Dublin 4 (IE)
(72) Inventor: Privitera, Roberto, 00146 Rome (IT); Martino, Laura, 00139 Rome (IT); De Luca, Domenico, Rome (IT)
(74) Representative: Müller-Boré & Partner Patentanwälte

(56) References cited:
- EP-A- 1 594 032
- WO-A-2007/038131

## Description

### BACKGROUND OF THE INVENTION

### 1. Technical Field.

This application relates to a digital content management system for accessing, managing, sharing and securing data.

### 2. Related Art.

The proliferation of digital content has been unrelenting and ever increasing. Driven by strong consumer demand, digital music players, cellular phones, personal data assistants, personal computers, and other devices routinely provide access to staggering amounts of information. The information spans virtually every part of life, from telephone numbers, to personal contacts, to home videos, to personal music collections, to name just a few. One revealing indicator of the extent to which we rely on digital data is the size of common hard disk drives. While at one time an 80MB hard drive seemed excessive, today individual disk drives available for personal computers offer multiple Terabytes of storage, and there is no sign that drive capacity growth will stop.

WO 2007/038131 A (COMCAST CABLE HOLDINGS LLC [US]; COMPTON CHARLES L [US]) 5 April 2007, discloses a content storage method for use in a content distribution network. Accordingly, a personal file locker is established on the network for a user. In addition, a content-storage-request database is also established. The database tracks requests by the user for placing video programs into the user's file locker for personal use by the user.

EP-A-1 594 032 (MICROSOFT CORP [US]) 9 November 2005, discloses a file locker that manages the storage and use of protected data for software objects. The file locker uses a protected environment's sealing functionality to seal data items for the file locker's exclusive access. The file locker seals, to itself, files received from software objects, and provides those files upon request, and upon sufficient proof of the requestor's trustworthiness, authenticity, and/or identity.

### SUMMARY

A digital file locker system provides a personal content management system that allows subscribers to access, collect, manage, share, and keep digital data secure. The digital data may vary widely in scope and purpose. As examples, the digital data may include files and folders, information tags for digital data, video files, photo files, music files, and documents such as word processor, spreadsheet, and presentation documents.

The digital file locker system further provides sophisticated content management services, which may include file and folder creation, file uploading and downloading, tag management, and file renaming, moving, and deleting. The services may also include content sharing, file transmission, backup and restore, and video recording. Further examples of services include photo album content management and access, with advanced search capability and space utilization reporting.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 shows a digital file locker system.

Figure 2 shows a digital file locker overview.

Figure 3 shows a folder creation interface for a digital file locker system.

Figure 4 shows a file upload and download management interface for a digital file locker system.

Figure 5 shows a tag management interface for a digital file locker system.

Figure 6 shows a file renaming, moving, and deleting management interface for a digital file locker system.

Figure 7 shows a file and folder management interface.

Figure 8 shows a hardware platform for file and folder management.

Figure 9 shows a flow diagram for file and folder management logic.

Figure 10 shows a content sharing interface for a digital file locker system.

Figure 11 shows a content forwarding interface for a digital file locker system.

Figure 12 shows a hardware platform for content sharing.

Figure 13 shows a flow diagram for content sharing logic.

Figure 14 shows a backup interface for a digital file locker system.

Figure 15 shows a hardware platform for backup and restore operations.

Figure 16 shows a flow diagram for backup and restore logic.

Figure 17 shows a video recording logic diagram.

Figure 18 shows a hardware platform for video play operations.

Figure 19 shows a flow diagram for video play logic.

Figure 20 shows a hardware platform for video recording operations.

Figure 21 shows a flow diagram for video recording logic.

Figure 22 shows a personal content access interface for a digital file locker system.

Figure 23 shows a photo management interface for a digital file locker system.

Figure 24 shows a hardware platform for photo access.

Figure 25 shows a flow diagram for photo access logic.

Figure 26 shows a search interface for a digital file locker system.

Figure 27 shows an administrator interface for a digital file locker system.

Figure 28 shows a hardware platform for an administrative interface.

Figure 29 shows a flow diagram for administration logic.

### DETAILED DESCRIPTION OF THE PREFERRED EMBODIMENTS

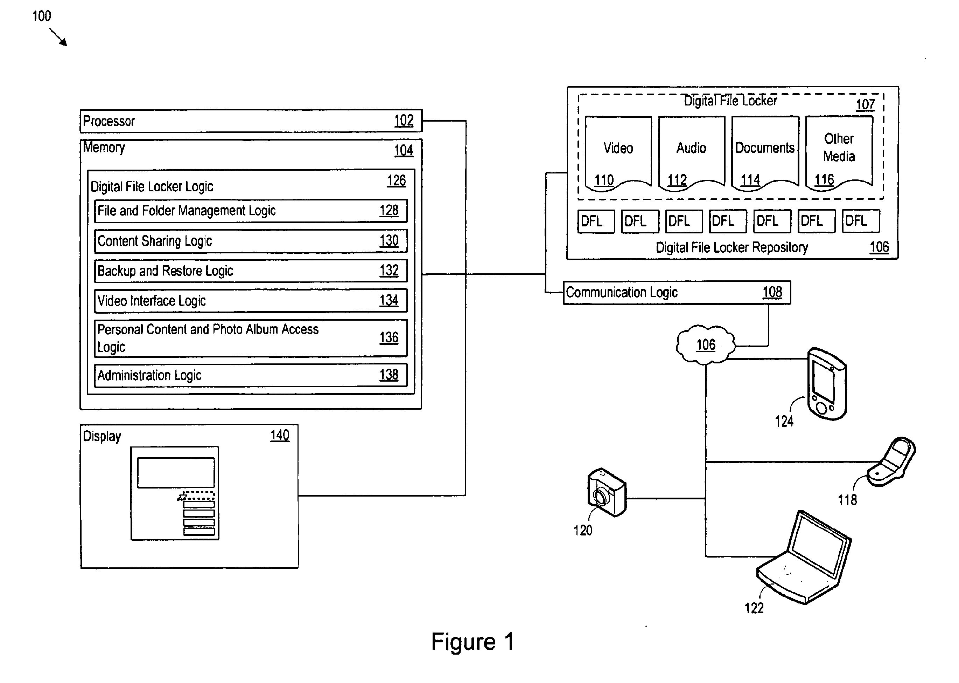

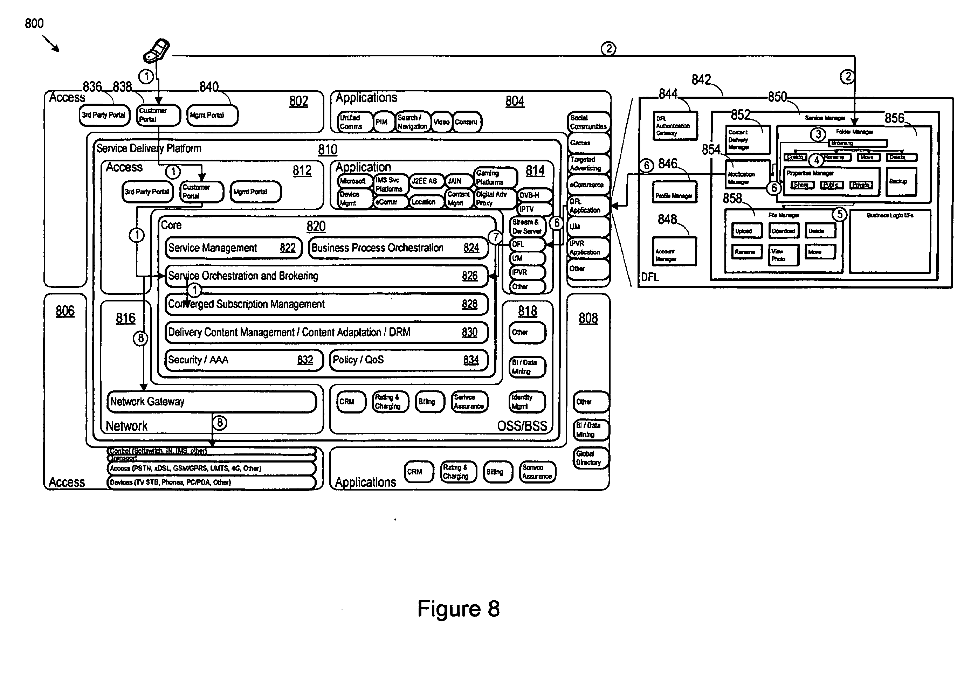

Figure 1 shows a digital file locker system ("system 100"). The system 100 includes a processor 102, a memory 104, and a digital file locker repository ("repository") 106. The repository 106 stores digital file lockers (DFLs) 107 that hold subscriber digital content for a particular subscriber. There may be any number of DFLs for any number of subscribers in the repository 106. The system 100 may be implemented in many different ways, including as shown in Figure 1, as shown in the hardware platform diagrams in Figures 8, 12, 15, 18, 20, 24, and 28, or in other ways. The system 100 exchanges information with other systems through the communication logic 108. The communication logic 108 may be a wireline / wireless interface, interprocess communication mechanism, shared memory, Web Services interface, or any other type of communication interface.

The repository 106 provides a centralized digital content repository that stores subscriber digital content uploaded by a subscriber. As examples, the subscriber digital content may include video data 110, audio data 112, document data 114, or any other type of data 116 uploaded by the subscriber. The repository thereby provides a central point of access for any number of subscribers to their own digital content, eliminating the need to store such content locally. The digital content is therefore available to the subscriber wherever the subscriber is located.

The subscribers may vary widely in form. One example shown in Figure 1 is the cellular phone 118. Other examples include the digital camera 120, laptop computer 122, and the personal data assistant 124.

The memory stores digital file locker ("DFL") logic 126. The DFL logic 126 may include file and folder management logic 128, content sharing logic 130, and backup and restore logic 132. The DFL logic 126 may also include video interface logic 134, photo album access logic 136, and subscription logic 138.

The DFL logic 116 provides flexible access to the subscriber digital content. As an example, system 100 may receive a digital content manipulation command from the subscriber. The video interface logic 134 may then determine that the digital content manipulation command includes a video content access command, retrieve a video content catalog of video content within the subscriber digital content in response to the video content access command, and deliver the video content catalog to the subscriber. The video interface logic 134 may also accept a video action selection request from the subscriber in response to the delivering the video content catalog to the subscriber, and determine the type of video action selection request. When the video action selection request is a video playback request, the video interface logic 134 may determine a resource locator for the video content selection request and deliver the resource locator to the subscriber. When the video action selection request is a video record request, the video interface logic 134 may accept a video stream from the subscriber and store the video stream in the digital content repository 106 as part of the subscriber digital content.

As another example, the content sharing logic 130 may determine that the digital content manipulation command includes a digital content shared property command specifying a shared user and first selected shared content within the digital content. The content sharing logic 130 may then set a shared content property for the shared user on the first selected digital content according to the shared property command, and send a shared property notification to a message communication system for automated delivery to the shared user. The content sharing logic may be further adapted to generate a shared user list comprising shared user identifiers and accept a subscriber selection from the shared user identifiers of a selected shared user identifier corresponding to the shared user. The content sharing logic may further determine that the digital content manipulation command includes a content forward command for second selected shared content within the digital content, accept a subscriber selection of a delivery type that distinguishes between an email attachment and a multimedia messaging service message, accept a subscriber selection of a delivery mode that distinguishes between email delivery and cellular phone delivery, accept a subscriber selection of a content recipient, and communicate the second selected shared content to the content recipient according to the delivery type and the delivery mode.

The file and folder management logic 128 provides flexible control over files and folders within the subscriber digital content. The backup and restore logic 132 provides the subscriber with the ability to save and retrieve selected portions of their uploaded content. The photo album access logic 136 may provide access to and manipulation of organizations of images stored in the subscriber digital content. The administration logic 138 may implement organizational access and control over the subscriber digital content, such as setting disk space quotas, access time restrictions, and other administrative settings for the subscriber digital content.

The display 140 provides for local or remote display showing the operation of the system 100. The subscribers 118 - 124 may also generate displays as they interact with the system 100. The system 100 may generate a wide variety of interfaces as described in more detail below, and interact with the subscribers 118 - 124 through the interfaces.

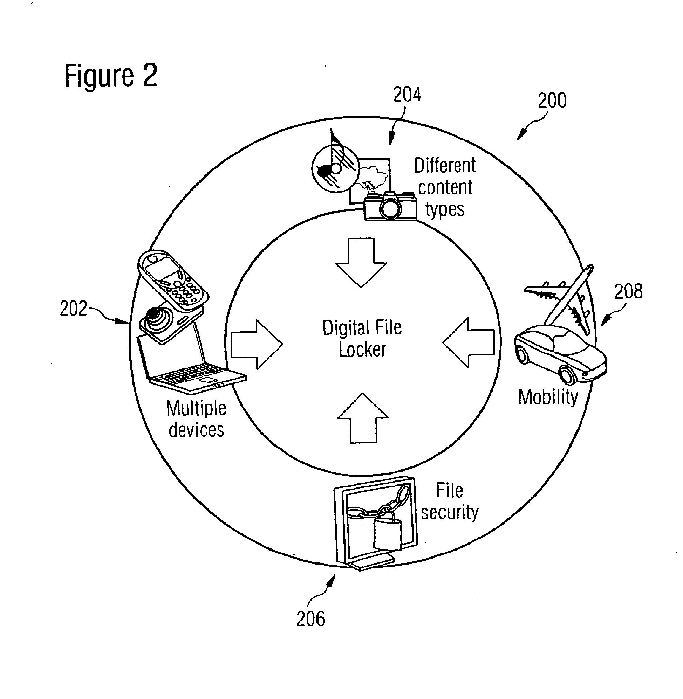

Figure 2 shows a digital file locker overview 200. Multiple devices 202 may provide and access multiple different content types 204 to the system 100. The system 100 provides file security 206 and is accessible regardless of the mobility characteristics 208 of the subscriber.

The system 100 manages and keeps safe subscriber digital content through a web interface with low complexity deployment and scalability. The system 100 increases collaboration by sharing content between employees and provides centralized content storing, for simple access and distribution. The system 100 also manages personal media files including pictures, multimedia files, documents and video recordings. The subscriber may access the system 100 from any mobile or fixed connection. The system 100 adds value to main services by providing an integrated answer to document management needs.

The system 100 may provide many different types of functionality. Examples include: File and folder management, including Create Folder, File Upload/Download, Tag management, and File rename/move/delete; Content Sharing, including File Transmission; Backup & Restore; Internet Protocol (IP) Video Recording; Access to Personal Content & Photo Album; and Other functionalities, including Advanced Search, Used space visualization, and Administrative control and Subscription through a Service Factory Catalogue.

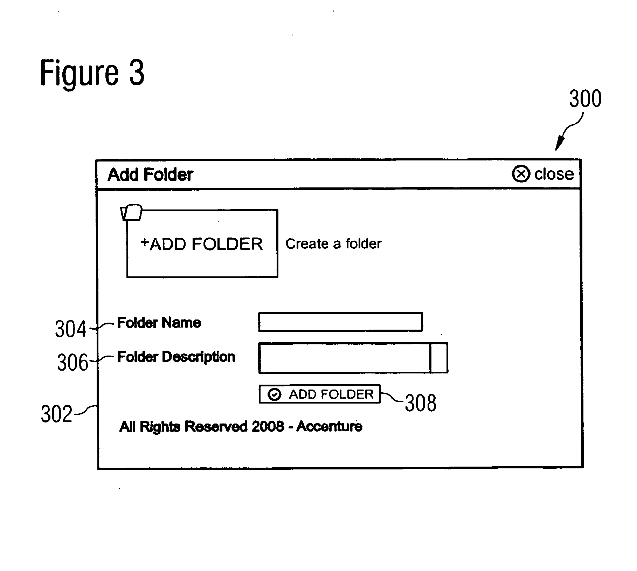

Figure 3 shows a folder creation interface 300 for a digital file locker system that the logic 128 may generate. Before adding content the subscriber decides how to organize his DFL in the repository 106. The system 100 may provide default folders (e.g., for music and video). When the subscriber selects 'Add Folder' the interface 300 opens and allows the subscriber to create a new DFL, including hierarchically arranged structure. The interface 300 includes an add folder interface 302 including a folder name field 304, folder description field 306, and an add folder button 308. In response to subscriber input, the logic 128 creates folders in the repository 106.

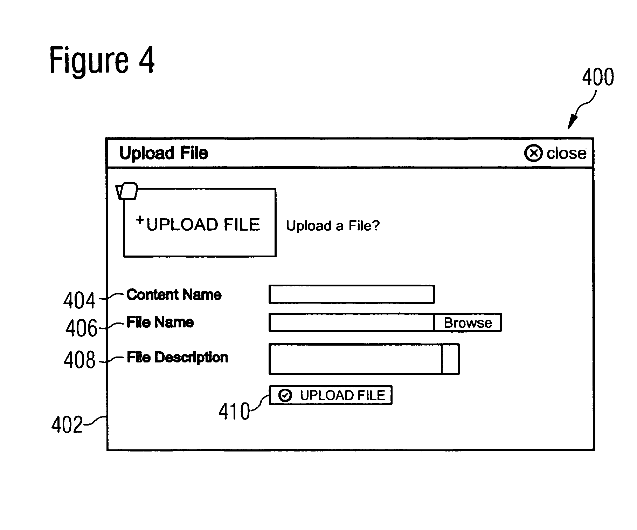

Figure 4 shows a file upload and download management interface 400 for a digital file locker system that the logic 128 may generate. The interface 400 includes an upload folder interface 402 including a content name field 404, a filename field 406, a file description field 408, and an upload button 410. In response to subscriber input, the logic 128 uploads the specified file name into the repository 106 and attaches the specified file description and content name. When the subscriber selects 'Upload File', the subscriber may upload files from a PC or mobile phone to his DFL in the repository 106. The interface 400 opens to help the user to add content to a DFL. The logic 128 is adapted to provide uploading single files, whole folders, e-mail attachments, public content from the Web, and also is adapted to permit the subscriber to download files from any folder of his DFL to any device.

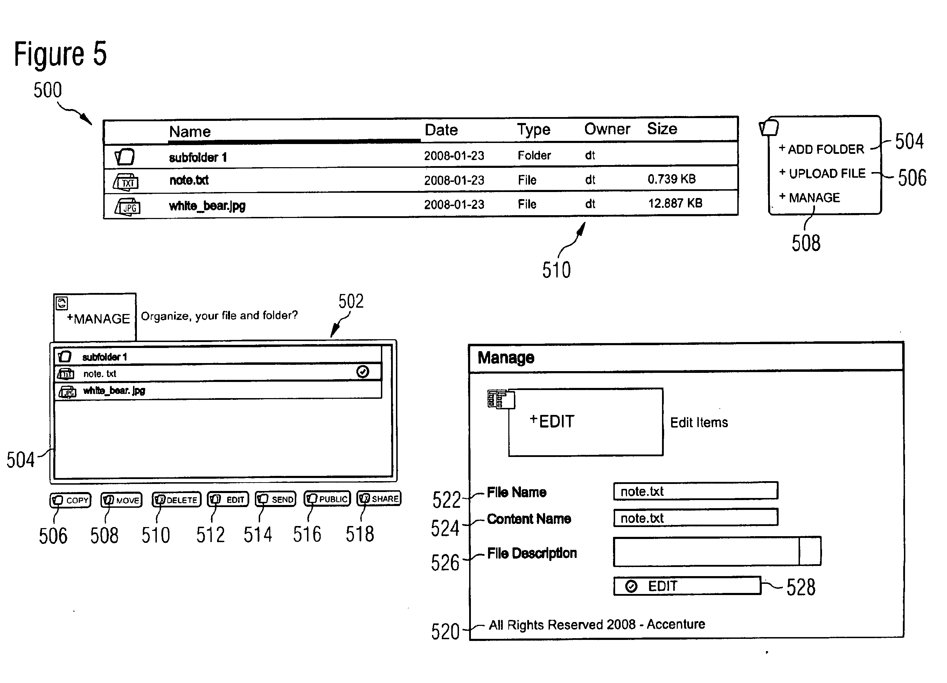

Figure 5 shows a file and folder management interface 500 for the logic 128, including a tag management interface 502. The interface 500 includes an 'Add Folder' button 504, an 'Upload File' button 506, and a 'Manage' button 508. The interface 500 further includes a content display section 510 that specifies folder names, hierarchical structure, content date, types, owner, sizes, and other characteristics.

The interface 502 is displayed when the 'Management' button 508 is selected. The interface 502 provides a content management command window 504. The window 504 may include content manipulation command buttons, including a copy button 506 (to copy data), a move button 508 (to move data to another DFL), a delete button 510 (to delete data), an edit button 512 (to update tags or other properties), a send button 514 (to communicate data to another subscriber), a public button 516 (to make data public), and a share button 518 (to specify selected subscribers who may access the data).

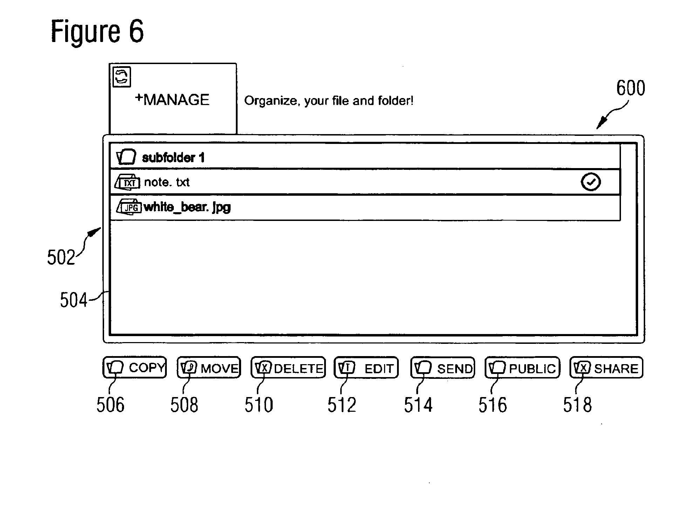

Figure 6 shows a file renaming, moving, and deleting management interface 502 in more detail. Clicking on the edit button 512, for example, displays the Edit interface 520. The edit interface 520 includes a file name field 522, a content name field 524, a file description field 526, and an edit accept button 528. The logic 128 updates the subscriber digital content according to the data entered in the fields 522 - 526. Similarly, the subscriber may rename content by selecting the edit button 512 and specifying a different name in the dialog window. The subscriber may also delete the selected file by clicking on the delete button 510, and may be asked to confirm the deletion. The subscriber may move a file by selecting the move button 508, and may copy a file to another folder by using the copy button 506.

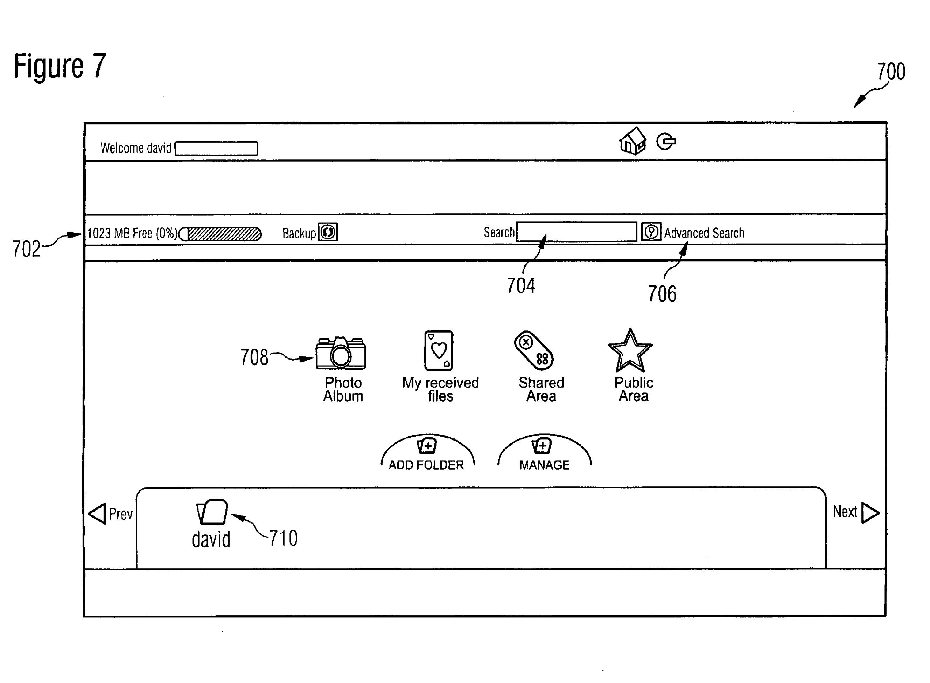

Figure 7 shows a main file and folder management interface 700 for the system 100. The interface 700 includes a use gauge 702, a search interface 704, with advanced search link 706, and a content selection icons 708 (e.g., for photos, received files, shared files, and public files). A DFL selector interface 710 is also shown. The system 100 allows the subscriber to manage folders and files from the interface 700. The subscriber may browse folders using the interface 710, select a specific folder, and create other folders with hierarchical structure. The subscriber may also set folder properties (e.g., private, shared, public). The subscriber may also upload files, navigate to files stored, and select and upload specific content to any DFL. Upon selecting a specific file, the subscriber may rename, delete or move the file to another folder.

Figure 8 shows a hardware platform 800 for file and folder management. The platform 800 includes an access layer 802, an applications layer 804, a network layer 806, an Operational Support System (OSS) / Business Support System (BSS) layer 808, a service delivery platform (SDP) 810. The service delivery platform 810 may include interfaces for each layer, such as access interfaces 812, applications interfaces 814, network interfaces 816, and OSS interfaces 818. Core logic in the service delivery platform 810 is also present and may include: service management logic 822, business process orchestration logic 824, service orchestration and brokering logic 826, converged subscription management logic 828, delivery content management / content adaptation / digital restrictions management logic 830, security logic 832, and policy and quality of service logic 834.

The access layer 802 may include subscriber portal logic 836, management portal logic 838, and third party portal logic 840 through which subscribers, managers, and third parties access the platform 800. The application layer 804 includes the DFL application logic 842, which communicates with the service orchestration logic 826 to handle DFL operations.

The DFL application logic 824 includes a DFL authentication gateway 844, a profile manager 846, and an account manager 848. The DFL application logic 824 further includes a service manager 850 with a content delivery manager 852, notification manager 854, a folder manager 856, and a file manager 858. The folder manager 856 supports backups, browsing, creating, renaming, moving, and deleting files. The folder manager 856 also supports setting properties, such as shared, public, and private properties. The file manager 858 supports uploading, downloading, deleting, renaming, viewing (e.g., photos), and moving files.

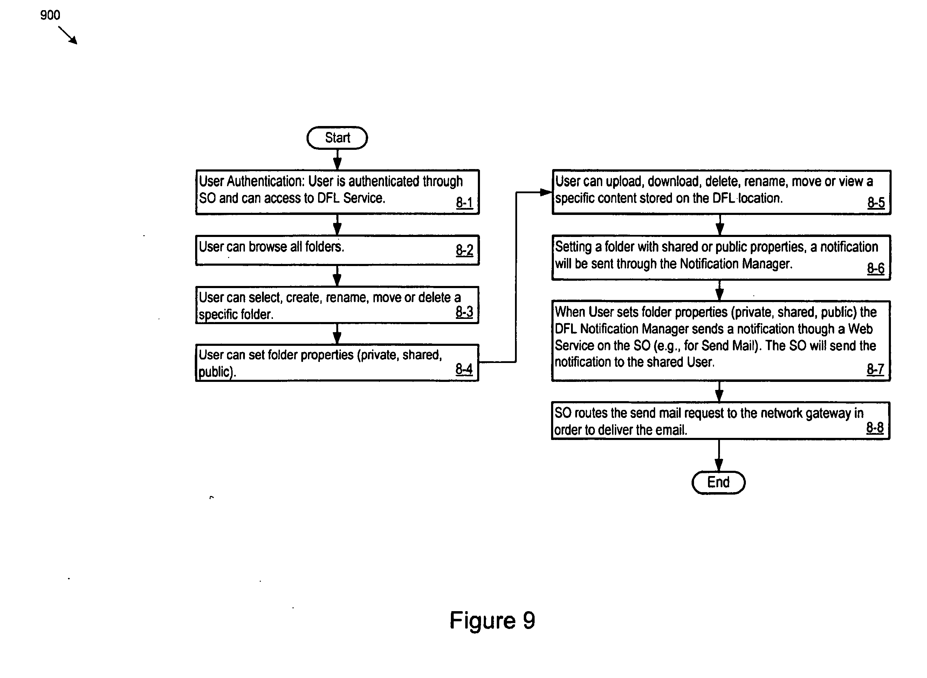

Figure 9 shows a flow diagram 900 for file and folder management logic interacting with the platform 800, as shown with the reference numbers 1 - 8 in Figure 8. The subscriber authenticates with the service provider through the service orchestration (SO) 826 and converged subscription management (CSM) 828 (8-1). Using the DFL application logic 842, the subscriber may browse folders (8-2), select, create, rename, move, or delete folders (8-3), and set folder properties (e.g., private, shared, public) (8-4). Additionally, the subscriber may upload, download, delete, rename, move, or view content stored in the subscriber DFL (8-5).

When the subscriber sets folder properties (8-6), the DFL application logic 842 sends a notification (e.g., using a Web Service front end for a Send Mail application) to the service orchestration (SO) logic 826. The SO logic 826 sends the notification to the user that the subscriber added as allowed to share their subscriber content (8-7). The SO logic 826 routes the send mail request to the network gateway which coordinates mail delivery (8-8).

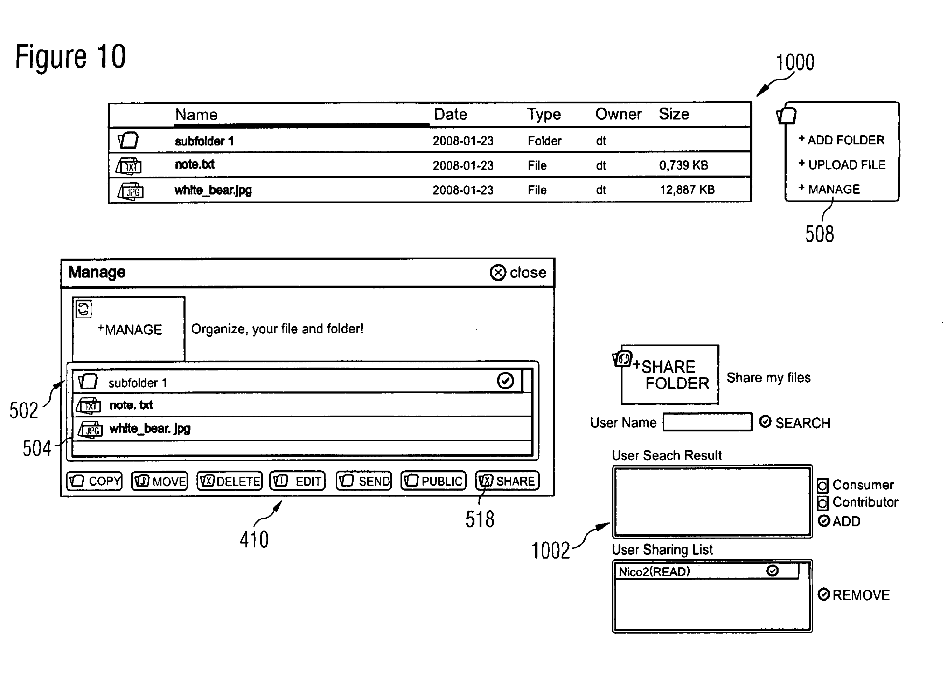

Figure 10 shows a content sharing interface 1000 similar to that shown in Figure 5 for a digital file locker system. The subscriber may share folder with friends or family, as examples. In an enterprise environment, shared folders may be used as a virtual workspace, in which users can work together on the same task from different locations and devices. To share folder the subscriber presses the manage ***button*** 508. The subscriber selects the folder and presses the share button 518. A share interface 1002 is displayer that prompts the subscriber to select from a list of entities to grant the access to the shared folder. When the operation is completed a mail or SMS is sent to the selected entities.

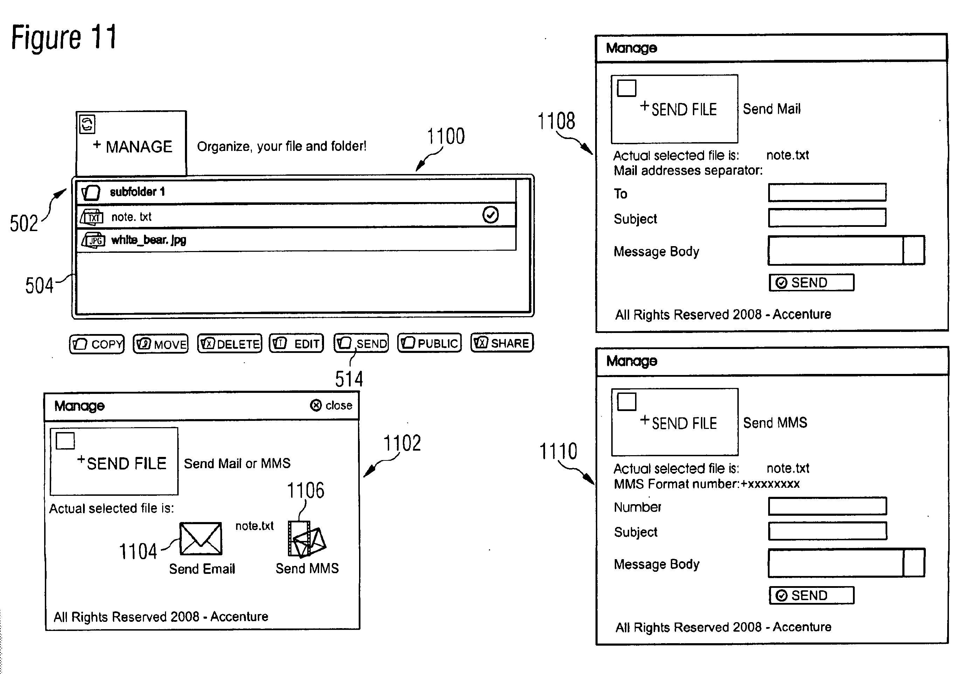

Figure 11 shows a content forwarding interface 1100 for a digital file locker system. The subscriber can forward multimedia content (photos, music, videos) stored in his DFL to any other entity. The subscriber selects one of the contents stored in his DFL and press the send button 514. The delivery selection interface 1102 appears, and allows the subscriber to choose to send the content as an attachment to an e-mail message 1104 or to send it as an MMS 1106. Depending on the selected sending mode the subscriber may specify the e-mail address using the email interface 1108 or mobile phone number of the recipient using the MMS interface 110.

The system 100 facilitates sharing contents with others such as friends/family. From the main DFL interface 700, the subscriber may open folders and access his DFL. Upon selecting a specific shared folder, the subscriber may add users that may access the content of folder. Upon selecting a specific shared folder, the subscriber may also delete users that can access the content of folder. Once finished, the subscriber may exit from the application.

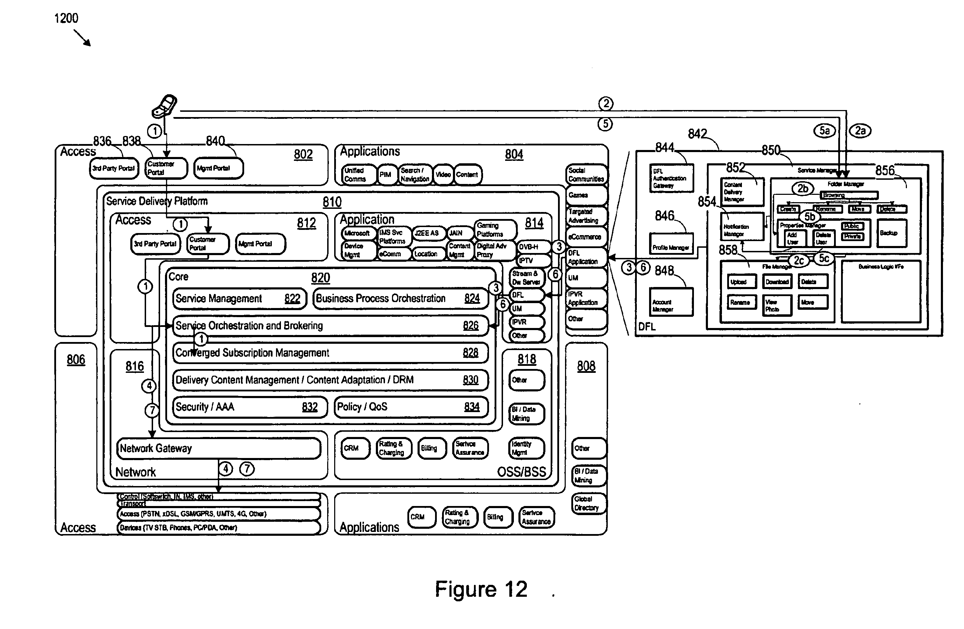

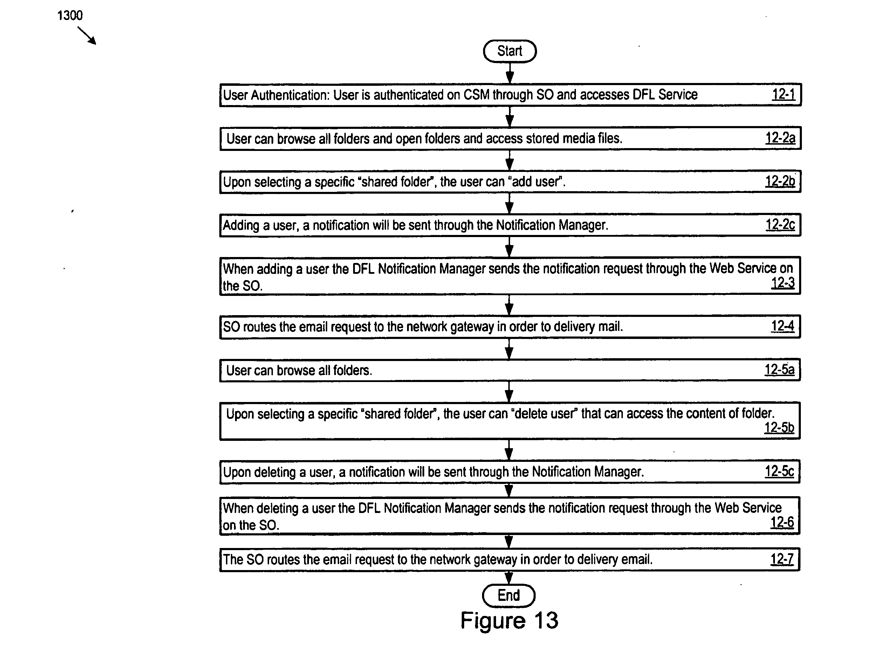

Figure 12 shows a hardware platform 1200 for content sharing. Figure 13 shows a flow diagram for content sharing logic interacting with the hardware platform 1200, with reference numbers back to Figure 12. User Authentication: The subscriber is authenticated on CSM 828 through the SO logic 826 and can access DFL Service (12-1). The subscriber may browse all folders and open folders and access stored media files (12-2a). Upon selecting a specific "shared folder", the subscriber may "add user" (12-2b). Upon adding a subscriber, a notification will be sent through the Notification Manager 854 (12-2c).

When adding a user the DFL Notification Manager 854 sends the notification request through the desired Web Service on the SO 826 (e.g., a send mail Web Service) (12-3). The SO 826 routes the email request to the network gateway in order to deliver the email (12-4). The subscriber may also browse all folders (12-5a). Upon selecting a specific "shared folder", the user can "delete user" that can access the content of folder (12-5b). Upon deleting a user, a notification will be sent through the Notification Manager 854 (12-5c). When deleting a user the DFL Notification Manager 854 sends the notification request through the Web Service on the SO 826 (12-6). The SO 826 routes the email request to the network gateway in order to deliver the email (12-7).

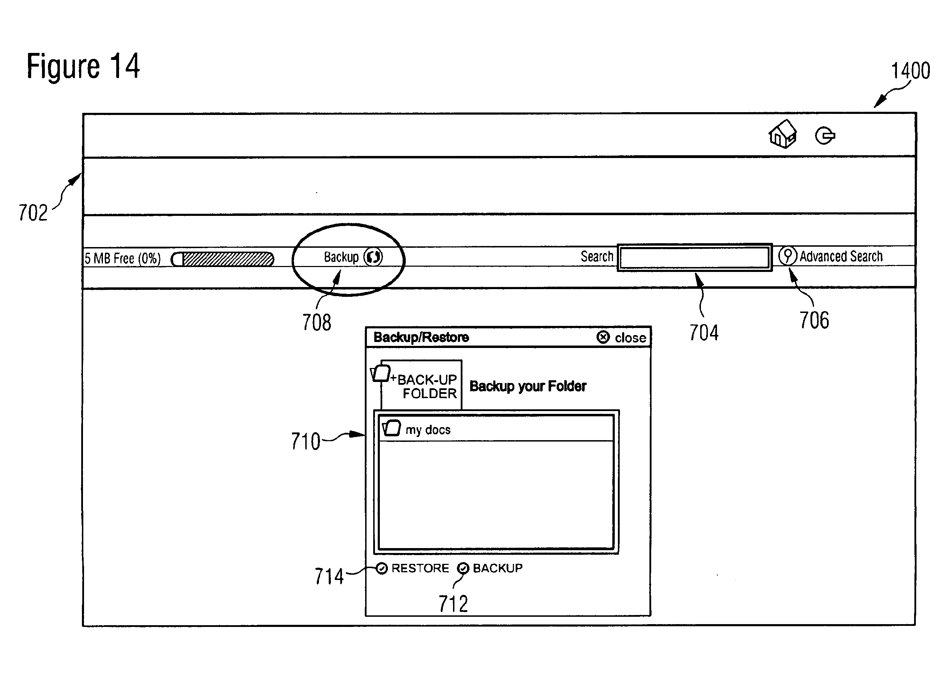

Figure 14 shows a backup interface 1400 for a digital file locker system including a backup button 708. The system 100 responds to the backup button 708 by displaying the backup/restore interface 710. The subscriber selects a specific folder to backup listed in the interface 710 and presses the backup button 712. The backup procedure may execute on all subfolders and files contained in the selected folder. The subscriber may also restore backups by selecting the folder to be restored and clicking on the restore button 714.

In other words, the system 100 allows subscribers to access backup/restore features. The subscriber may browse his folders, select a specific folder (e.g. root) to choose the "backup folder". The entire sub-tree may be stored. If the backup folders already exist for the selected folder, the copy may be overwritten. From the DFL interface 700, the subscriber is also able to select "restore folder".

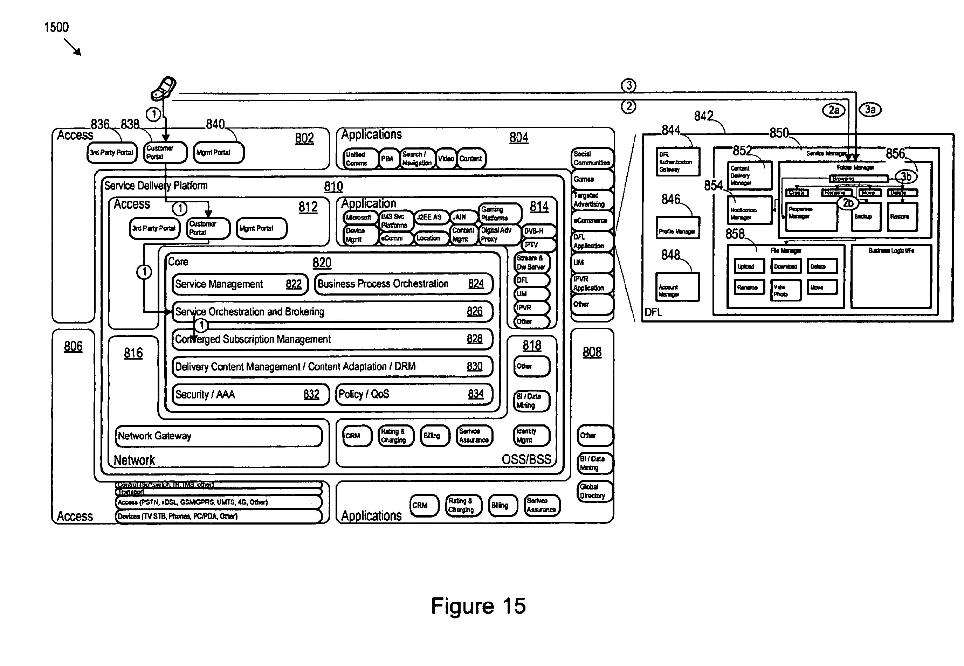

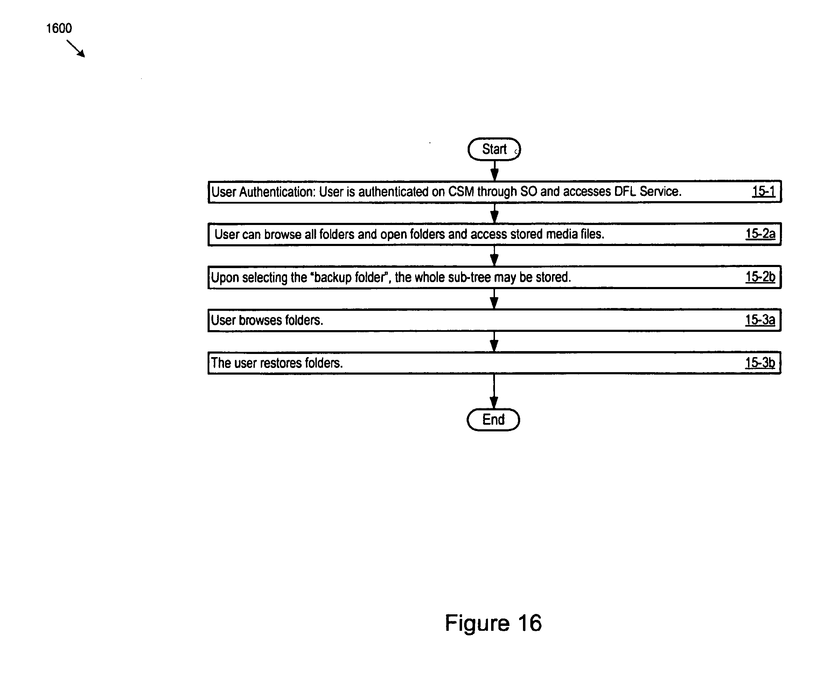

Figure 15 shows a hardware platform 1500 for backup and restore operations. Figure 16 shows a flow diagram for backup and restore logic interacting with the hardware platform 1500, with reference numbers back to Figure 15. User Authentication: the subscriber is authenticated on CSM 828 through SO 826 and accesses the DFL system 100 (15-1). The subscriber may browse all folders and open folders and access stored media files (15-2a). The subscriber may also select the backup folder, and the system 100 may store the whole sub-tree folder structure (15-2b). The subscriber may also browse folders (15-3a) and restore folders (15-3b).

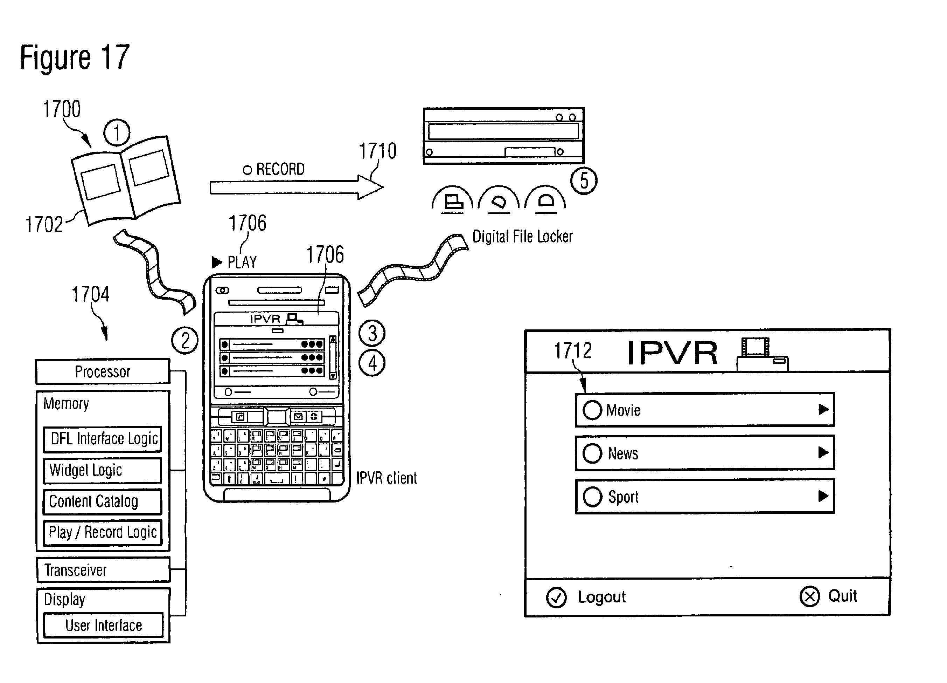

Figure 17 shows a video recording logic diagram 1700. The subscriber starts a widget application 1702 that the endpoint 1704 (e.g., a cellular phone) provides. The endpoint 1704 includes a transceiver, including an antenna, amplifier, modulator / demodulator, and other waveform transmission / reception circuitry for interacting with the hardware platforms. To that end, the endpoint may also include a processor, a display, and a memory in which programs such as the DFL interface logic are stored. The DFL interface logic may provide the user interfaces for accessing the subscriber DFL and coordinating requests for content (e.g., playing or recording a video using play / record logic) and content management (e.g., deleting, moving, sharing, and renaming folders and files). As one example, the DFL interface logic may include the widget application 1702. The processor executes the widget application when commanded by the subscriber and displays the user interface 1708 on the endpoint 1704.

The widget application 1702 requests a content catalogue from the DFL system 100. The endpoint 1704 receives the content catalogue (e.g., containing video file entries) and displays the content catalogue for the subscriber in the user interface 1708. The subscriber browses the catalogue and chooses any of the available content, which may be organized according to any desired categories 1712. The subscriber clicks the play button 1706 on the user interface 1708. The play / record logic in the endpoint 1704 requests the video in streaming mode from the hardware platform for the subscriber to watch.

Alternatively, the subscriber may select the Record button 1710 on the interface 1708 to upload a video file to his DFL. The DFL stores the video content for future retrieval. Once the content is stored in the DFL, the subscriber may access the content by connecting to the system 100 from any location.

The system 100 thereby provides Internet Protocol (IP) Video Recording (IPVR) service and viewing service. The services allow the subscriber to access a video catalog through a mobile handset or other endpoint. The subscriber may then choose to play content or record content to the DFL.

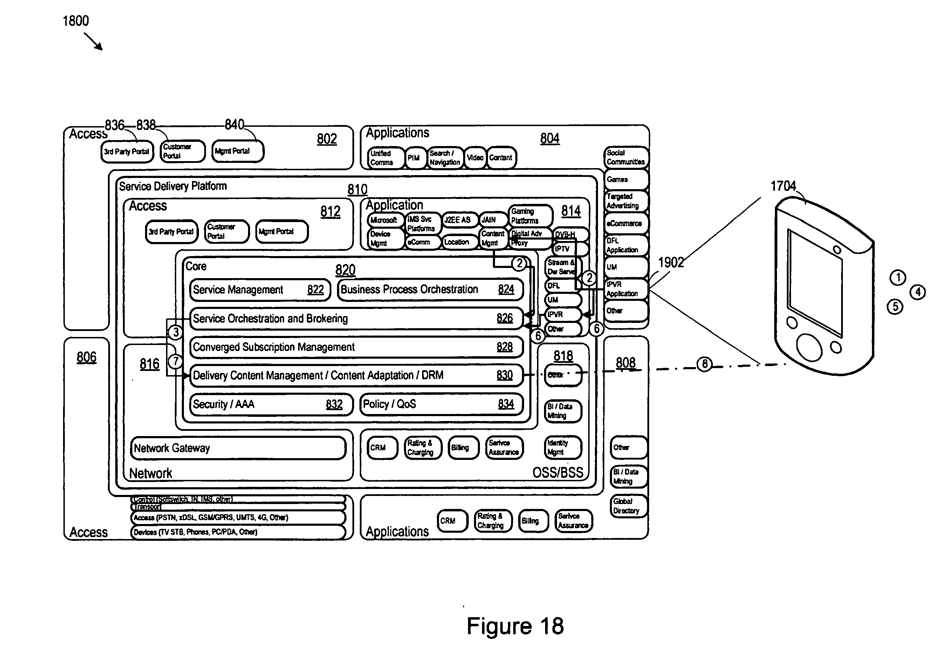

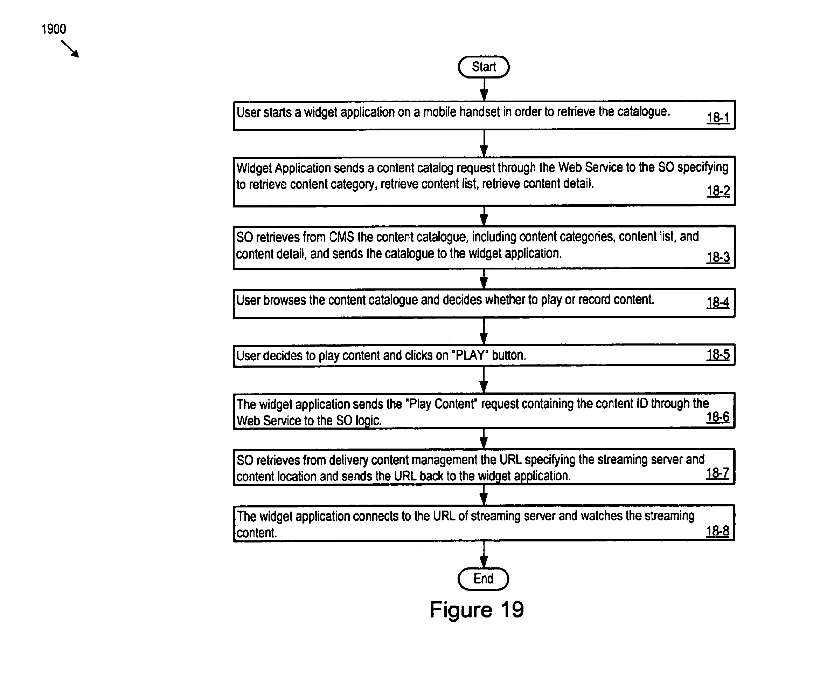

Figure 18 shows a hardware platform 1800 for video play operations. The application layer 804 in the platform 1800 includes an IPVR application 1902 that interacts with the endpoint 1704 to provide video playback and recording capability. Figure 19 shows a flow diagram for video play logic that interacts with the platform 1800, with reference numbers back to Figure 18. The subscriber starts a widget application on an endpoint and the widget application retrieves a content catalogue (18-1). In particular, the widget application 1702 sends a content catalog request (e.g., "Download CMS Mobile Catalogue") through to a Web Service on the SO logic 826 (18-2). The content catalog request may specify to retrieve one or more of content categories, content lists, and content details.

The SO logic 826 retrieves from CMS logic 828 the content catalog, which may include content categories, content lists, resource locator (e.g., video file server and filename), and content detail (18-3). The SO logic 826 then sends the content catalogue (e.g., as an extensible Markup Language (XML) file to the endpoint 1704 and the widget application 1702 (18-3). The subscriber browses the content catalog and issues a video action selection request with respect to a content catalog entry to play. Alternatively, the subscriber may issue a video action selection request to record content (18-4).

When the video action selection request is a video playback request (18-5), the widget application 1702 sends a "Play Content" request containing the content ID (e.g., a resource locator) through the Web Service to the SO logic 826 (18-6). The SO logic 826 retrieves from the delivery content management logic 830 the URL for a streaming server or other content delivery logic and sends the URL back to the widget application 1702 (18-7). The widget application connects to the URL of the streaming logic and views the streaming content (18-8). The streaming logic may be the delivery content management logic 830, which may transcode video data to any format requested by the subscriber, and which may enforce digital restrictions management on the subscriber.

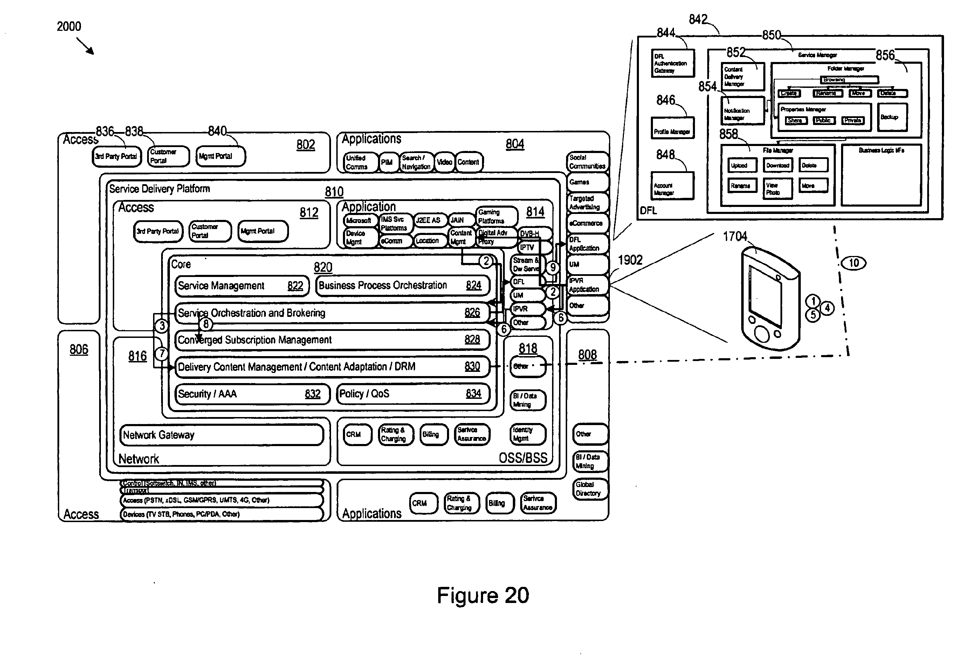

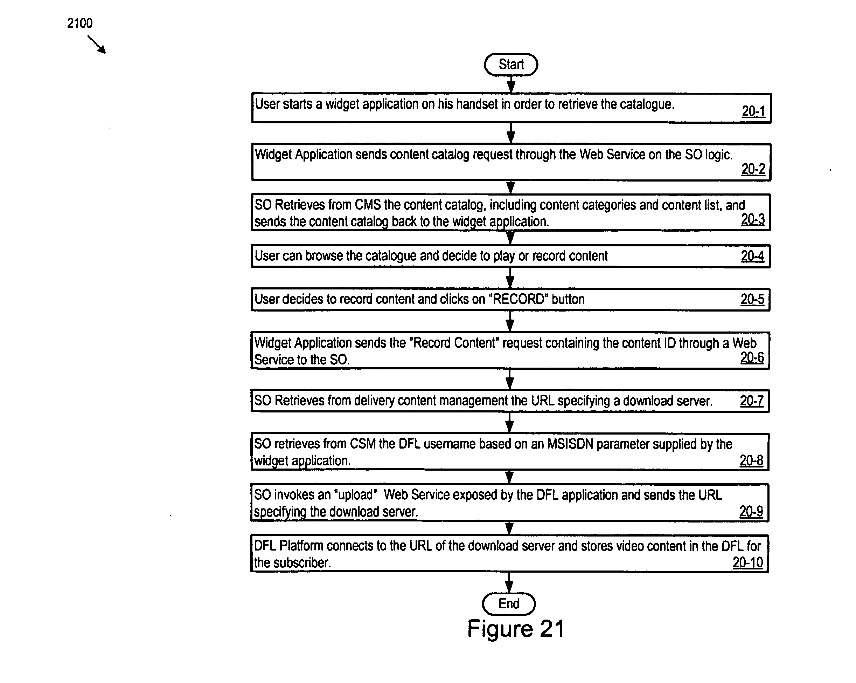

Figure 20 shows a hardware platform 2000 for video recording operations. Figure 21 shows a flow diagram 2100 for video recording logic, with reference numbers back to Figure 20. The subscriber starts a widget application 1702 on an endpoint 1704 and the widget application 1702 retrieves a content catalogue (20-1). In particular, the widget application 1702 sends a content catalog request (e.g., "Download CMS Mobile Catalogue") through a Web Service on the SO logic 826 (20-2). The content catalog request may specify to retrieve one or more of content categories, content lists, content details, or other video content information.

The SO logic 826 retrieves from CMS the content catalog, which may include content categories, content lists, and content detail (20-3). The SO logic 826 then sends the content catalogue (e.g., as an extensible Markup Language (XML) file to the endpoint 1704 and the widget application 1702 (20-3). The subscriber browses the content catalog and issues a video action selection request with respect to a content catalog entry to play, or to record content (20-4).

When the video action selection request is a video record request (20-5), the widget application 1702 sends a "Record Content" request containing the content ID (e.g., a resource locator) through the Web Service to the SO logic 826 (20-6). The SO logic 826 retrieves from the delivery content management logic 830 a URL or other location indicia specifying a download server (20-7). The SO logic 826 also retrieves from the CSM logic 828 the username associated with the DFL for the subscriber (20-8). In one implementation, the CMS logic accepts a Mobile Subscriber Integrated Services Digital Network Number (MSISDN) from the widget application 1702, and searches based on the MSISDN to obtain the associated username.

The SO logic 826 then invokes an upload Web Service (or other interface) that the DFL application 842 exposes (20-9). The SO logic 826 sends the URL of the download server to the upload web service. The DFL application 842 then connects to the URL of the download server and stores the video content with the download server. The DFL application 842 may also create a filename or other content entry in the DFL assigned to the subscriber that represents the newly stored video content (20-10). Thus, the platform 2000 facilitates recording of video content captured by the endpoint 1702 in the DFL for the subscriber.

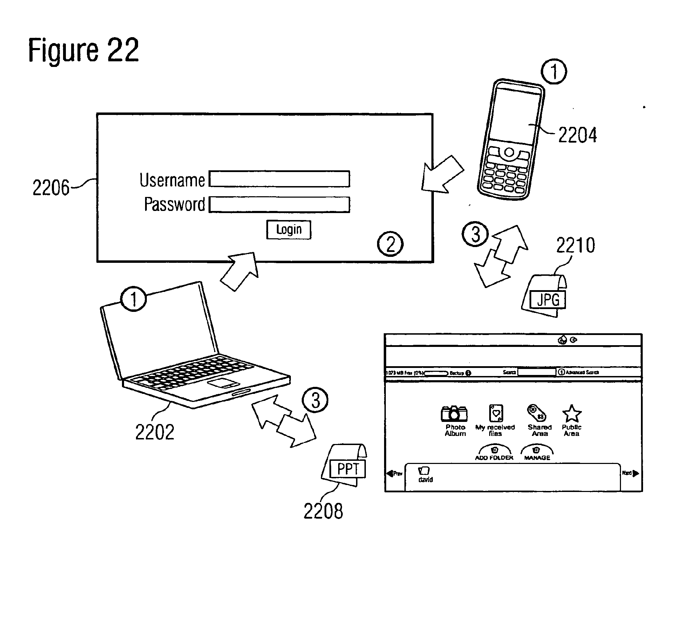

Figure 22 shows a personal content access interface 2200 for a digital file locker system. The files hosted in the DFL virtual space are accessible via any endpoint, such as a personal computer 2202 and a mobile phone 2204. The subscriber connects to the login webpage 2206 using a WAP/GPRS/UMTS or a WiFi/Wired connection. Once logged in, the subscriber can access content 2208, 2210 uploaded/downloaded between the DFL for the subscriber and the endpoint.

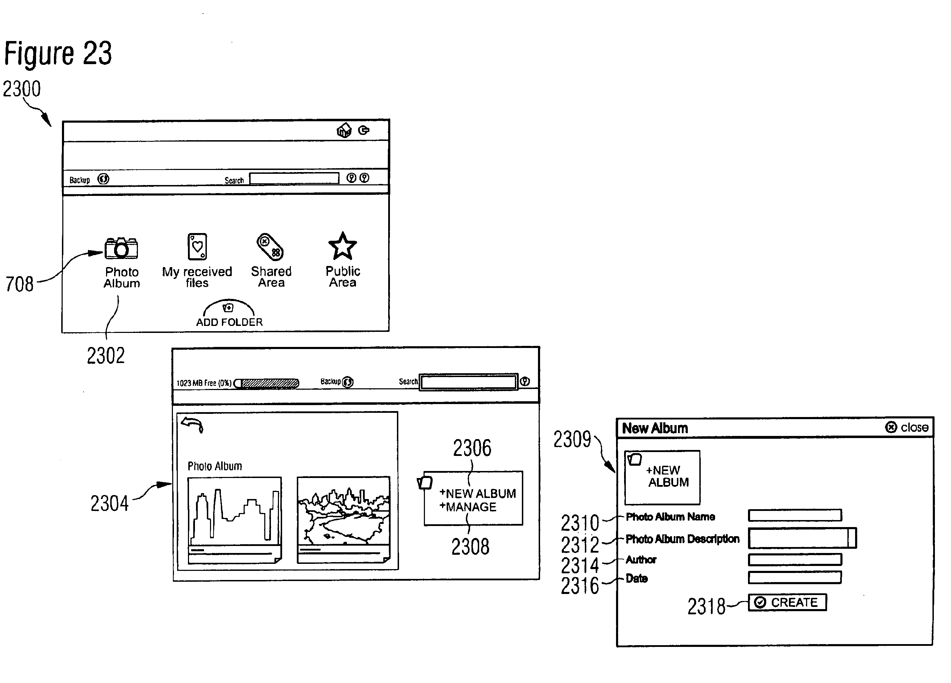

Figure 23 shows a photo management interface 2300 for a digital file locker system. Each subscriber may have a default photo folder 2302 (e.g., labeled 'Photo album') to which the subscriber may upload/delete his pictures. The subscriber may enter the Photo Album interface 2304, and see his Albums and pictures stored inside. The subscriber may also manage the photo album, including creating new albums using the New Album button 2306 and may use the Manage button 2308 to select album covers, add comments to the pictures, or take other actions. An example of the new album interface 2309 is shown and includes a name field 2310, a description field 2312, an author field 2314, a date field 2316, and a create button 2318.

In other words, the DFL system facilitates subscriber management, access, and use of personal media content from the DFL interface 700. From the DFL interface, the subscriber may open folders and access stored media files. Upon selecting a photo the subscriber may view the photo in full screen mode. From the Photo Album folder, the subscriber may view photo content in slide-show mode and choose a cover for album. The subscriber may also forward the photos/ videos to any other entity using MMS or may place any content in a specific folder (e.g. public) for which he has credentials.

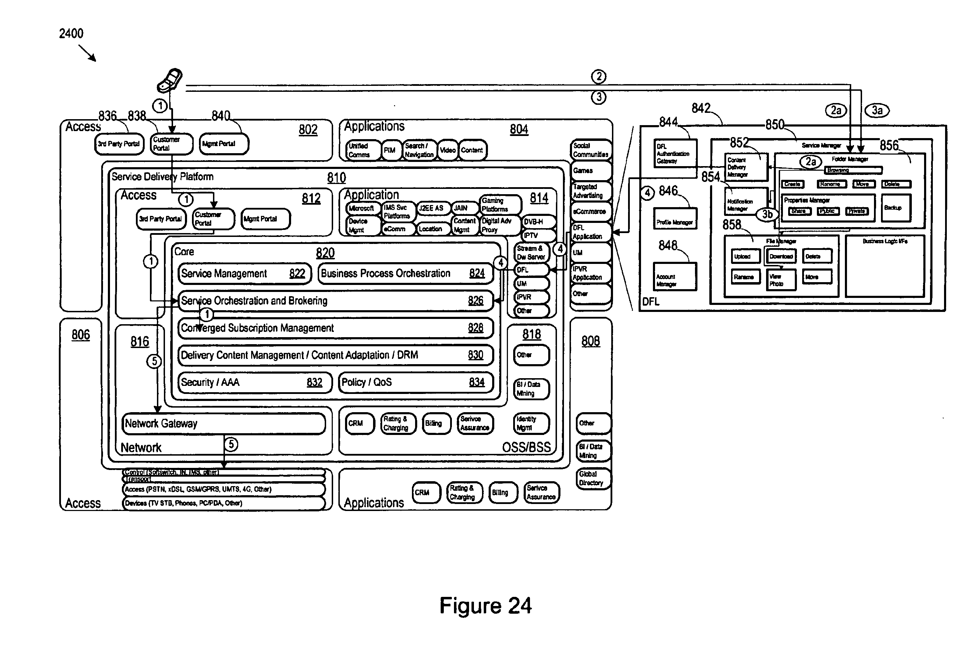

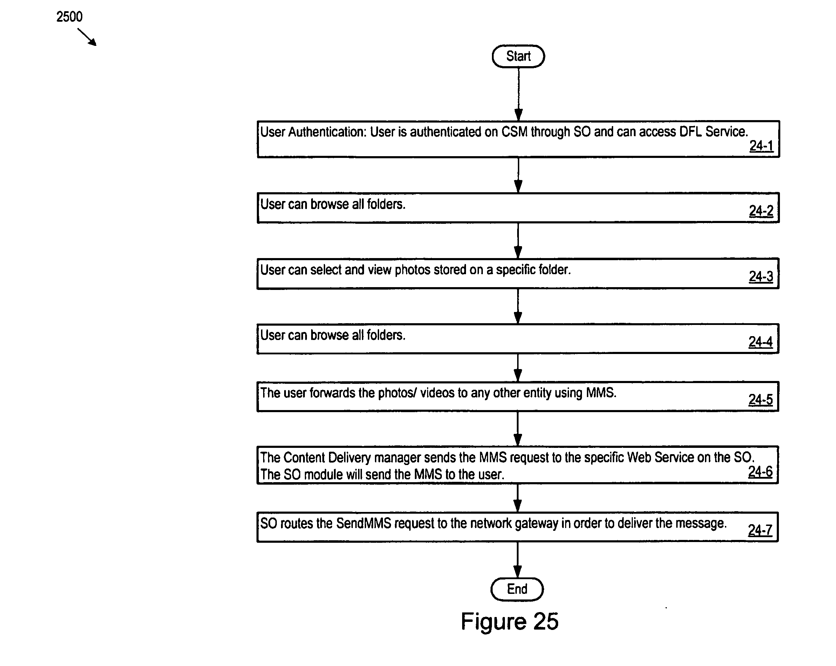

Figure 24 shows a hardware platform 2400 for photo access. Figure 25 shows a flow diagram 2500 for photo access logic, with reference numbers back to Figure 24. User Authentication: the subscriber is authenticated (e.g., based on a username / password) with CSM through the SO logic 826 and can access the DFL system (24-1). The subscriber may browse all folders (24-2). The subscriber may also select and view photos stored on a specific folder (24-3) and browse all folders within the specific folder (24-4). The subscriber may forward the photos / videos to any other entity using MMS (24-5). To that end, the delivery content manager 830 sends the MMS request to the specific Web Service on the SO logic 826 (24-6). The SO logic 826 sends the MMS to the user by routing a SendMMS request to the network gateway in order to deliver the message (24-7).

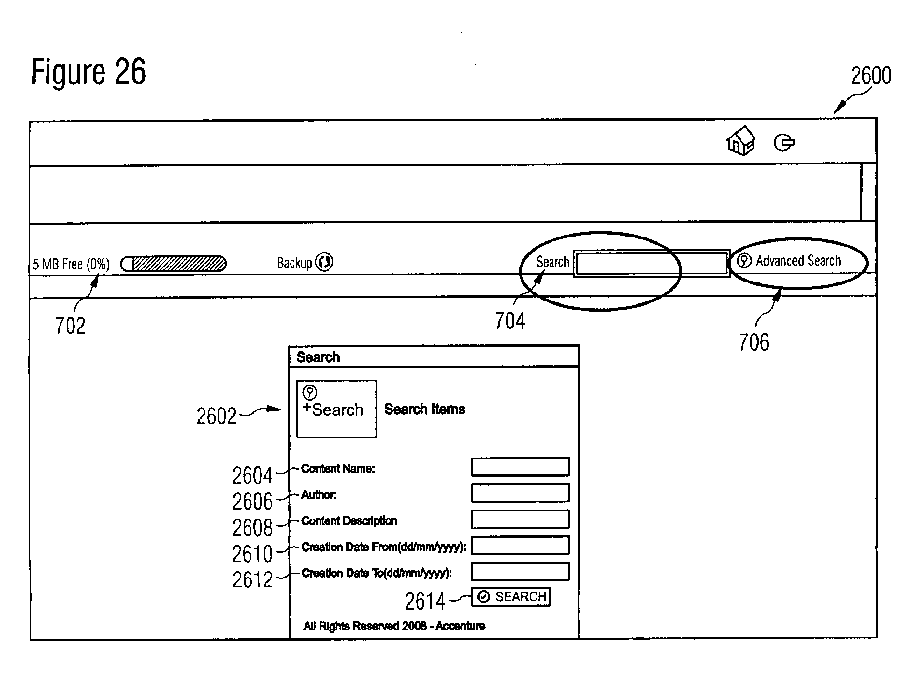

Figure 26 shows a search interface 2600 for a digital file locker system. The advanced search functionality 706 allows the subscriber to search content throughout all available DFLs. The basic search field 704 is present at the top of each interface screen page and may be based on filename searching, or any other search criteria. An advanced search interface 2602 is also shown. With the interface 2602, the subscriber may specify additional parameters. To that end, the interface 2602 includes a content name field 2604, an author search field 2606, a content description field 2608, a creation date From search field 2610, and a creation date To search field 2612. A search button 2614 initiates the search. Furthermore, at any time the subscriber may check remaining free space in the DFL, which the graphical space indicator 702 shows (e.g., as a percentage bar).

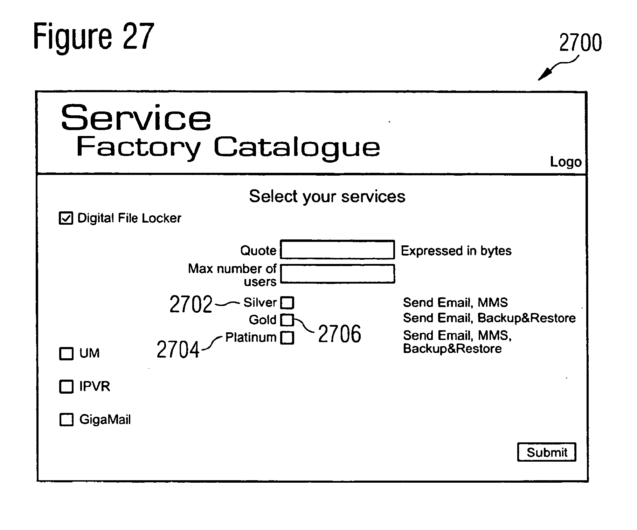

Figure 27 shows an administrator interface 2700 for administering DFL accounts and referred to as service factory catalog access. A top level administrator accesses the service factory catalog and may create an organization and a primary administrator. Either administrator may access the service factory catalog and enter a user ID and password which are authenticated by the SDP. The interface 2700 displays the services provided by the system, such as sending email at the Silver level 2702, sending email and backup / restore at the Gold level 2704, and sending email, MMS messages, and backup / restore at the Platinum level 2706. The administrators use the interface 2700 to subscribe and configure a service (e.g., enter a disk quota in bytes, and specify the maximum number of users), and enter the subscriber data, including service credentials. The data entered by the administrators are stored in the CSM 828. The service activation for the subscriber is provisioned on supporting service platforms through the SO logic 826.

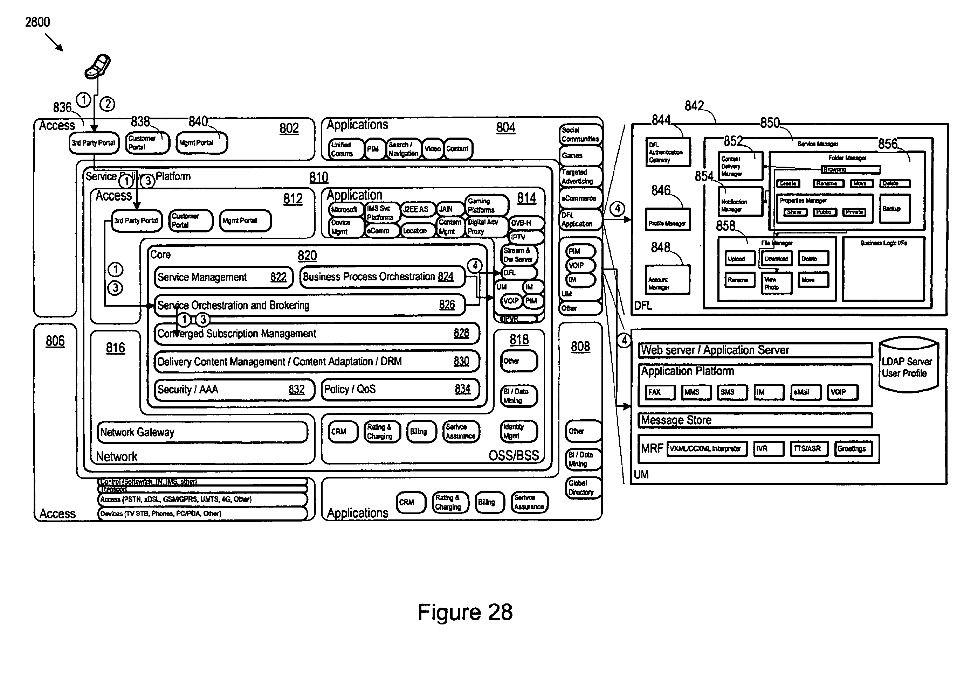

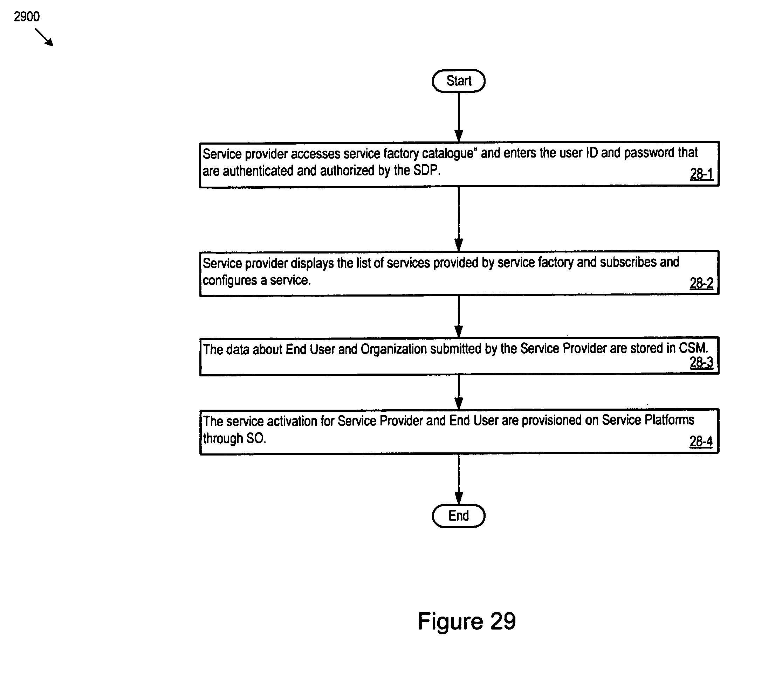

Figure 28 shows a hardware platform 2800 for an administrative interface. Figure 29 shows a flow diagram for administration logic, with reference numbers back to Figure 28. The service provider accesses the service factory catalogue and enters the user ID and password that are authenticated and authorized by the SDP (28-1). The interface 2700 displays the list of services provided by the service factory and the administrator may subscribe and configure DFL services (28-2). The data about the subscriber and organization submitted by the administrator are stored in the CSM 828 (28-3). Also, the service activation for the service provider and the subscriber are provisioned on service platforms under coordination of the SO logic 826 (28-4).

The systems and hardware platforms described above may be implemented in many different ways. The functionality may be implemented in a single system or functionally partitioned across multiple systems. As another example, logic implemented as computer-executable instructions or as data structures in memory may be stored on, distributed across, or read from many different types of machine-readable media. The machine-readable media may include RAM, ROM, hard disks, floppy disks, CD-ROMs, a signal, such as a signal received from a network or partitioned into sections and received in multiple packets communicated across a network. The systems may be implemented in software, hardware, or a combination of software and hardware.

Furthermore, the systems may be implemented with additional, different, or fewer components. As one example, a processor or any other logic may be implemented with a microprocessor, a microcontroller, a DSP, an application specific integrated circuit (ASIC), program instructions, discrete analog or digital logic, or a combination of other types of circuits or logic. As another example, memories may be DRAM, SRAM, Flash or any other type of memory. The systems may be distributed among multiple components, such as among multiple processors and memories, optionally including multiple distributed processing systems. Logic, such as programs or circuitry, may be combined or split among multiple programs, distributed across several memories and processors, and may be implemented in or as a function library, such as a dynamic link library (DLL) or other shared library.

Examples of protocols that the systems and hardware platforms may employ include the Real Time Messaging Protocol (RTMP) and Real Time Streaming Protocol (RTSP). The FLV (Flash Video) format may be employed for the media streams, and the systems may include Adobe (TM) Flash Media Streaming Server software, available from Adobe System Incorporated of San Jose, CA. As other examples, the systems may include a Flash Lite (TM) server, QuickTime (TM) streaming server, or Darwin open-source server.

However, any other protocols for communicating audio, video, and data over a network between a server and an endpoint may be employed. The transport layer may include Transport Control Protocol (TCP), Real Time Transport Protocol (RTP) or other transport logic. The network layer may route information based on Internet Protocol v4, v6 (i.e., IPv4 or IPv6) or other network layer protocols. The data link layer may include wired or wireless links, such as IEEE 802.11, WiFi, WiMAX, Asynchronous Transfer Mode (ATM), Fiber Distributed Data Interface (FDDI), Ethernet, or other data link layers over optical fiber, coaxial cable, twisted pair or other physical layers.

Interfaces between the systems and the logic and modules within systems may be implemented in numerous ways. For example, interface between systems may be Web Services interfaces. Other examples of interfaces include message passing, such as publish / subscribe messaging, shared memory, and remote procedure calls.

The hardware and software platforms that run on the endpoints may vary widely. As examples, the endpoints may run the Windows CE (TM) operating system, JAVA ME (TM) system, Symbian (TM) operating system, Palm (TM) operating system. The hardware platforms may be implemented with a general purpose processing platform, such as those available from Sun Microsystems, Hewlett Packard, or International Business Machines and running Unix, Windows (TM), Linux or other operating systems.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method for digital content management, comprising:
maintaining a centralized digital content repository (107) for a subscriber, the repository (107) comprising subscriber digital content (110, 112, 114, 116) uploaded by the subscriber;
accepting a digital content manipulation command from the subscriber;
when the digital content manipulation command comprises a video content access command:
retrieving a video content catalog of video content within the subscriber digital content (110, 112, 114, 116) in response to the video content access command;
delivering (18-3, 20-3) the video content catalog to the subscriber;
accepting a video action selection request from the subscriber in response to the delivering of the video content catalog to the subscriber;
when the video action selection request comprises a video playback request:
receiving (18-6) a video content selection request from the subscriber;
determining (18-7) a content server resource locator for a content server that will provide a video stream corresponding to the video content selection request; and
delivering the resource locator to the subscriber to facilitate connection of the subscriber to the content server for receiving the video stream; and
when the video action selection request comprises a video record request:
accepting (20-6) a video content identifier from the subscriber;
storing (20-10) the video content in the digital content repository (107) as part of the subscriber digital content (110, 112, 114, 116);
**characterised in that**:
when the digital content manipulation command comprises a digital content shared property command:
determining from the digital content shared property command a shared user and first selected shared content within the subscriber digital content (110, 112, 114, 116);
setting (8-6, 12-2b) a shared content property for the shared user on the first selected shared content according to the shared property command; and
sending (8-7, 12-2c) a shared property notification to a message communication system for automated delivery to the shared user.

2. The method of claim 1, further comprising:
generating a shared user list comprising shared user identifiers; and
accepting a subscriber selection from the shared user identifiers of a selected shared user identifier corresponding to the shared user.

3. The method of any claim 1 or 2, further comprising:
determining that the digital content manipulation command comprises a content forwarding command for second selected shared content within the digital content (110, 112, 114, 4, 116);
accepting a subscriber selection of a delivery type;
accepting a subscriber selection of a delivery mode;
accepting a subscriber selection of a content recipient; and
communicating the second selected shared content to the content recipient according to the delivery type and the delivery mode.

4. The method of claim 3, where the delivery type distinguishes between an email attachment and a multimedia messaging service message.

5. The method of claim 3, where the delivery mode distinguishes between email delivery and cellular phone delivery.

6. A digital content management system (100) comprising:
a centralized digital content repository (107) comprising subscriber digital content (110, 112, 114, 116) uploaded by a subscriber;
a subscriber interface adapted to receive a digital content manipulation command from the subscriber;
video interface logic (134) adapted to:
determine that the digital content manipulation command comprises a video content access command;
retrieve a video content catalog of video content within the subscriber digital content (110, 112, 114, 116) in response to the video content access command;
deliver (18-3, 20-3) the video content catalog to the subscriber;
accept a video action selection request from the subscriber in response to the delivering the video content catalog to the subscriber;
when the video action selection request comprises a video playback request:
receive (18-6) a video content selection request from the subscriber;
determine (18-7) a content server resource locator for a content server that will provide a video stream corresponding to the video content selection request; and
deliver the resource locator to the subscriber to facilitate connection of the subscriber to the content server for receiving the video stream;
when the video action selection request comprises a video record request: accept (20-6) a video content identifier from the subscriber; and store (20-10) the video content in the digital content repository (107) as part of the subscriber digital content (110, 112, 114, 116); and
**characterised in that** the content sharing logic (130) is adapted to:
determine that the digital content manipulation command comprises a digital content shared property command specifying a shared user and first selected shared content within the digital content (110, 112, 114, 116);
set (8-6, 12-2b) a shared content property for the shared user on the first selected shared content according to the shared property command; and
send (8-7, 12-2c) a shared property notification to a message communication system for automated delivery to the shared user.

7. The system of claim 6, where the content sharing logic (130) is further adapted to:
generate a shared user list comprising shared user identifiers; and
accept a subscriber selection from the shared user identifiers of a selected shared user identifier corresponding to the shared user.

8. The system of claim 6 or 7, where the content sharing logic (130) is further operable to:
determine that the digital content manipulation command comprises a content forward command for second selected shared content within the digital content (110, 112, 114, 116);
accept a subscriber selection of a delivery type that distinguishes between an email attachment and a multimedia messaging service message;
accept a subscriber selection of a delivery mode that distinguishes between email delivery and cellular phone delivery;
accept a subscriber selection of a content recipient; and
communicate the second selected shared content to the content recipient according to the delivery type and the delivery mode.

9. A machine readable medium including instructions which when executed by a data processing system, cause the data processing system to perform the method of any of claims 1 to 5.

## Patentansprüche

1. Ein Verfahren zur Verwaltung von digitalem Inhalt oder *Content,* das Folgendes umfasst:
unterhalten einer zentralen Lagerstätte (107) für digitalen Inhalt für einen Abonnenten, wobei die Lagerstätte (107) den digitalen Inhalt (110, 112, 114, 116) des Abonnenten umfasst, der vom Abonnenten hochgeladen wird;
akzeptieren eines Befehls des Abonnenten zur Manipulation von digitalem Inhalt;
wenn der Befehl zur Manipulation von digitalem Inhalt einen Zugriffsbefehl auf Videoinhalt umfasst:
abrufen eines Videoinhalt-Katalogs von Videoinhalten, die innerhalb des digitalen Inhalts (110, 112, 114, 116) des Abonnenten liegen, als Antwort auf den Zugriffsbefehl auf Videoinhalt;
bereitstellen (18-3, 20-3) des Videoinhalt-Katalogs für den Abonnenten;
akzeptieren einer Anfrage nach Auswahl von Videoaktionen vonseiten des Abonnenten als Antwort auf das Bereitstellen des Videoinhalt-Katalogs für den Abonnenten;
wenn die Anfrage nach Auswahl von Videoaktionen eine Anfrage nach Video-Wiedergabe umfasst:
empfangen (18-6) einer Anfrage nach Auswahl von Videoinhalten vonseiten des Abonnenten;
bestimmen (18-7) eines *Content-Server Resource Locators* für einen *Content-Server*, der den Video-Stream bereitstellen wird, welcher der Anfrage nach Auswahl von Videoinhalten entspricht; und
bereitstellen des *Resource Locators* für den Abonnenten, um die Verbindung des Abonnenten mit dem *Content Serverzum* Empfang des Video-*Streams* zu vereinfachen; und
wenn die Anfrage nach Auswahl von Videoaktionen eine Anfrage nach Video-Aufnahme umfasst:
akzeptieren (20-6) eines Videoinhalt-Identifikators vom Abonnenten;
speichern (20-10) des Videoinhalts in der Lagerstätte (107) für digitalen Inhalt als Teil des digitalen Inhalts (110, 112, 114, 116), der dem Abonnenten zugehörig ist;
**dadurch gekennzeichnet, dass**
wenn der Befehl zur Manipulation von digitalem Inhalt einen Befehl zum Miteigentum von digitalem Inhalt umfasst:
bestimmen ausgehend vom Befehl zum Miteigentum von digitalem Inhalt eines gemeinsamen Benutzers und ersten gewählten gemeinsam genutzten Inhalts innerhalb des digitalen Inhalts (110, 112, 114, 116) des Abonnenten;
festlegen (*setting*) (8-6, 12-2b) eines Miteigentums des gemeinsam genutzten Inhalts für den gemeinsamen Benutzer über den ersten gewählten gemeinsam genutzten Inhalt entsprechend des Befehls zum Miteigentum; und
senden (8-7, 12-2c) einer Mitteilung über Miteigentum an ein Mitteilungs-Kommunikationssystem zur automatischen Bereitstellung für den gemeinsamen Benutzer.

2. Das Verfahren nach Anspruch 1, das des Weiteren Folgendes umfasst:
generieren einer Liste gemeinsamer Benutzer, welche Identifikatoren gemeinsamer Benutzer umfasst; und
akzeptieren einer Abonnentenauswahl aus den Identifikatoren gemeinsamer Benutzer von einem gewählten gemeinsam genutzten Anwender-Identifikator, der dem gemeinsamen Benutzer entspricht.

3. Das Verfahren nach einem der Ansprüche 1 oder 2, das des Weiteren Folgendes umfasst:
bestimmen, dass der Befehl zur Manipulation von digitalem Inhalt einen Inhalt-Weiterleiten-Befehl für einen zweiten gewählten gemeinsam genutzten Inhalt innerhalb des digitalen Inhalts (110, 112, 114, 116) umfasst;
akzeptieren einer Abonnentenauswahl eines Bereitstellungstyps;
akzeptieren einer Abonnentenauswahl eines Bereitstellungsmodus';
akzeptieren einer Abonnentenauswahl eines Inhaltsrezipienten; und
kommunizieren des zweiten gewählten gemeinsam genutzten Inhalts an den Inhaltsrezipienten entsprechend dem Bereitstellungstyp und dem Bereitstellungsmodus.

4. Das Verfahren nach Anspruch 3, wobei der Bereitstellungstyp zwischen einem E-Mail-Anhang und einer *Multimedia Messaging Service* Nachricht unterscheidet.

5. Das Verfahren nach Anspruch 3, wobei der Bereitstellungsmodus zwischen einer Bereitstellung per E-Mail und einer Bereitstellung per Mobiltelefon unterscheidet.

6. Ein digitales *Content Management* System (100), das Folgendes umfasst:
eine zentrale Lagerstätte (107) für digitalen Inhalt, das digitalen Inhalt (110, 112, 114, 116) des Abonnenten umfasst, der vom Abonnenten hochgeladen wird;
eine Abonnenten-Schnittstelle, die dazu angepasst ist, einen Befehl vom Abonnenten zur Manipulation von digitalem Inhalt zu empfangen;
eine Video-Schnittstellen-Logik (134), die zu Folgendem angepasst ist:
bestimmen, dass der Befehl zur Manipulation von digitalem Inhalt einen Zugriffsbefehl auf Videoinhalt umfasst;
abrufen eines Videoinhalt-Katalogs von Videoinhalten, die innerhalb des digitalen Inhalts (110, 112, 114, 116) des Abonnenten liegen, als Antwort auf den Zugriffsbefehl auf Videoinhalt;
bereitstellen (18-3, 20-3) des Videoinhalt-Katalogs für den Abonnenten;
akzeptieren einer Anfrage nach Auswahl von Videoaktionen vonseiten des Abonnenten als Antwort auf das Bereitstellen des Videoinhalt-Katalogs für den Abonnenten;
wenn die Anfrage nach Auswahl von Videoaktionen eine Anfrage nach Video-Wiedergabe umfasst:
empfangen (18-6) einer Anfrage nach Auswahl von Videoinhalten vonseiten des Abonnenten;
bestimmen (18-7) eines *Content-Server Resource Locators* für einen *Content-Server*, der den Video-*Stream* bereitstellen wird, welcher der Anfrage nach Auswahl von Videoinhalten entspricht; und
bereitstellen des *Resource Locators* für den Abonnenten, um die Verbindung des Abonnenten mit dem *Content Server* zum Empfang des *Video-Streams* zu vereinfachen;
wenn die Anfrage nach Auswahl von Videoaktionen eine Anfrage nach Video-Aufnahme umfasst:
akzeptieren (20-6) eines Videoinhalt-Identifikators vom Abonnenten; und
speichern (20-10) des Videoinhalts in der Lagerstätte (107) für digitalen Inhalt als Teil des digitalen Inhalts (110, 112, 114, 116), der dem Abonnenten zugehörig ist; und
**dadurch gekennzeichnet, dass**
die *Content Sharing* Logik (130) zu Folgendem angepasst ist:
bestimmen, dass der Befehl zur Manipulation von digitalem Inhalt einen Befehl zum Miteigentum von digitalem Inhalt umfasst, der einen gemeinsamen Benutzer und einen ersten gewählten gemeinsam genutzten Inhalt innerhalb des digitalen Inhalts (110, 112, 114, 116) spezifiziert;
festlegen (*setting*) (8-6, 12-2b) eines Miteigentums des gemeinsam genutzten Inhalts für den gemeinsamen Benutzer über den ersten gewählten gemeinsam genutzten Inhalt entsprechend des Befehls zum Miteigentum; und
senden (8-7, 12-2c) einer Mitteilung über Miteigentum an ein Mitteilungs-Kommunikationssystem zur automatischen Bereitstellung für den gemeinsamen Benutzer.

7. Das System nach Anspruch 6, wobei die *Content Sharing* Logik (130) des Weiteren zu Folgendem angepasst ist:
generieren einer Liste gemeinsamer Benutzer, welche Identifikatoren gemeinsamer Benutzer umfasst; und
akzeptieren einer Abonnentenauswahl aus den Identifikatoren gemeinsamer Benutzer von einem gewählten gemeinsam genutzten Anwender-Identifikator, der dem gemeinsamen Benutzer entspricht.

8. Das System nach Anspruch 6 oder 7, wobei die *Content Sharing* Logik (130) des Weiteren zu Folgendem betreibbar ist:
bestimmen, dass der Befehl zur Manipulation von digitalem Inhalt einen Inhalt-Weiterleiten-Befehl für einen zweiten gewählten gemeinsam genutzten Inhalt innerhalb des digitalen Inhalts (110, 112, 114, 116) umfasst;
akzeptieren einer Abonnentenauswahl eines Bereitstellungstyps, der zwischen einem E-Mail-Anhang und einer *Multimedia Messaging Service* Nachricht unterscheidet;
akzeptieren einer Abonnentenauswahl eines Bereitstellungsmodus', der zwischen einer Bereitstellung per E-Mail und einer Bereitstellung per Mobiltelefon unterscheidet;
akzeptieren einer Abonnentenauswahl eines Inhaltsrezipienten; und
kommunizieren des zweiten gewählten gemeinsam genutzten Inhalts an den Inhaltsrezipienten entsprechend dem Bereitstellungstyp und dem Bereitstellungsmodus.

9. Ein maschinenlesbares Medium, das Anweisungen beinhaltet, die, wenn sie von einem Datenverarbeitungssystem ausgeführt werden, das Datenverarbeitungssystem dazu veranlassen, das Verfahren nach einem der Ansprüche von 1 bis 5 durchzuführen.

## Revendications

1. Un procédé pour la gestion des contenus numériques, comprenant le fait de :
garder un répertoire de contenu numérique centralisé (107) pour un abonné, le répertoire (107) comprenant un contenu numérique d'abonné (110, 112, 114, 116) téléchargé en amont par l'abonné;
accepter une commande de manipulation de contenu numérique de la part de l'abonné;
quand la commande de manipulation de contenu numérique comprend une commande d'accès au contenu vidéo :
récupérer un catalogue de contenu vidéo de contenu vidéo parmi le contenu numérique d'abonné (110, 112, 114, 116) en réponse à la commande d'accès au contenu vidéo ;
livrer (18-3, 20-3) le catalogue de contenu vidéo à l'abonné;
accepter de la part de l'abonné une demande de sélection d'action vidéo en réponse à la livraison du catalogue de contenu vidéo à l'abonné;
quand la demande de sélection d'action vidéo comprend une demande de lecture vidéo :
recevoir (18-6) une demande de sélection de contenu vidéo de la part de l'abonné;
déterminer (18-7) un localisateur de ressource de serveur de contenu pour un serveur de contenu qui va fournir un flux vidéo correspondant à la demande de sélection de contenu vidéo ; et
livrer le localisateur de ressource à l'abonné pour faciliter la connexion de l'abonné au serveur de contenu afin de recevoir le flux vidéo ; et
quand la demande de sélection d'action vidéo comprend une demande d'enregistrement vidéo :
accepter (20-6) un identificateur de contenu vidéo de la part de l'abonné;
stocker (20-10) le contenu vidéo dans le répertoire de contenu numérique (107) en tant que partie du contenu numérique d'abonné (110, 112, 114, 116) ;
**caractérisé en ce que** :
quand la commande de manipulation de contenu numérique comprend une commande de propriété partagée de contenu numérique :
déterminer à partir de la commande de propriété partagée de contenu numérique un utilisateur partagé et un premier contenu partagé sélectionné parmi le contenu numérique d'abonné (110, 112, 114, 116) ;
fixer (8-6, 12-2b) une propriété de contenu partagé pour l'utilisateur partagé sur le premier contenu partagé sélectionné conformément à la commande de propriété partagée ; et
envoyer (8-7, 12-2c) une notification de propriété partagé à un système de communication de messages pour la livraison automatisée à l'utilisateur partagé.

2. Le procédé d'après la revendication 1, comprenant en outre le fait de:
générer une liste d'utilisateurs partagés comprenant des identificateurs d'utilisateurs partagées ; et
accepter une sélection d'abonné à partir des identificateurs d'utilisateurs partagées d'un identificateur d'utilisateur partagé sélectionné correspondant à l'utilisateur partagé.

3. Le procédé d'après une des revendications 1 ou 2, comprenant en outre le fait de :
déterminer que la commande de manipulation de contenu numérique comprend une commande de redirection (*forwarding*) de contenu pour un deuxième contenu partagé sélectionné parmi le contenu numérique (110, 112, 114, 116) ;
accepter une sélection d'abonné d'un type de livraison ;
accepter une sélection d'abonné d'un mode de livraison ;
accepter une sélection d'abonné d'un destinataire de contenu ; et
communiquer le deuxième contenu partagé sélectionné au destinataire de contenu conformément au type de livraison et au mode de livraison.

4. Le procédé d'après la revendication 3, où le type de livraison distingue une pièce jointe à un mail d'un message par un service de messagerie multimédia.

5. Le procédé d'après la revendication 3, où le mode de livraison distingue une livraison par courrier électronique d'une livraison par téléphone cellulaire.

6. Un système de gestion de contenus numériques (100) comprenant :
un répertoire de contenu numérique centralisé (107) comprenant un contenu numérique d'abonné (110, 112, 114, 116) téléchargé en amont par un abonné ;
une interface d'abonné adaptée de manière à pouvoir recevoir une commande de manipulation de contenu numérique de la part de l'abonné;
une logique d'interface vidéo (134) adapté de manière à pouvoir:
déterminer que la commande de manipulation de contenu numérique comprend une commande d'accès au contenu vidéo ;
récupérer un catalogue de contenu vidéo de contenu vidéo parmi le contenu numérique d'abonné (110, 112, 114, 116) en réponse à la commande d'accès au contenu vidéo ;
livrer (18-3, 20-3) le catalogue de contenu vidéo à l'abonné;
accepter de la part de l'abonné une demande de sélection d'action vidéo en réponse à la livraison du catalogue de contenu vidéo à l'abonné;
quand la demande de sélection d'action vidéo comprend une demande de lecture vidéo :
recevoir (18-6) une demande de sélection de contenu vidéo de la part de l'abonné;
déterminer (18-7) un localisateur de ressource de serveur de contenu pour un serveur de contenu qui va fournir un flux vidéo correspondant à la demande de sélection de contenu vidéo ; et
livrer le localisateur de ressource à l'abonné pour faciliter la connexion de l'abonné au serveur de contenu afin de recevoir le flux vidéo ;
quand la demande de sélection d'action vidéo comprend une demande d'enregistrement vidéo :
accepter (20-6) un identificateur de contenu vidéo de la part de l'abonné; et
stocker (20-10) le contenu vidéo dans le répertoire de contenu numérique (107) en tant que partie du contenu numérique d'abonné (110, 112, 114, 116) ; et
**caractérisé en ce que** la logique de partage de contenu (130) est adaptée de manière à pouvoir :
déterminer que la commande de manipulation de contenu numérique comprend une commande de propriété partagée de contenu numérique spécifiant un utilisateur partagé et un premier contenu partagé sélectionné parmi le contenu numérique d'abonné (110, 112, 114, 116) ;
fixer (8-6, 12-2b) une propriété de contenu partagé pour l'utilisateur partagé sur le premier contenu partagé sélectionné conformément à la commande de propriété partagée ; et
envoyer (8-7, 12-2c) une notification de propriété partagé à un système de communication de messages pour la livraison automatisée à l'utilisateur partagé.

7. Le système d'après la revendication 6, où la logique de partage de contenu (130) est en outre adaptée de manière à pouvoir :
générer une liste d'utilisateurs partagés comprenant des identificateurs d'utilisateurs partagés ; et
accepter une sélection d'abonné à partir des identificateurs d'utilisateurs partagés d'un identificateur d'utilisateur partagé sélectionné correspondant à l'utilisateur partagé.

8. Le système d'après la revendication 6 ou 7, où la logique de partage de contenu (130) peut en outre fonctionner de manière à pouvoir :
déterminer que la commande de manipulation de contenu numérique comprend une commande de redirection (*forwarding*) de contenu pour un deuxième contenu partagé sélectionné parmi le contenu numérique (110, 112, 114, 116) ;
accepter une sélection d'abonné d'un type de livraison qui fait la distinction entre une pièce jointe à un mail et un message par un service de messagerie multimédia ;
accepter une sélection d'abonné d'un mode de livraison qui fait la distinction entre une livraison par courrier électronique d'une livraison par téléphone cellulaire;
accepter une sélection d'abonné d'un destinataire de contenu ; et
communiquer le deuxième contenu partagé sélectionné au destinataire de contenu conformément au type de livraison et au mode de livraison.

9. Un support lisible par une machine incluant des instructions, lesquelles lorsqu'elles sont exécutées par un système de traitement de données amènent le système de traitement de données à mettre en oeuvre le procédé d'après une des revendications de 1 à 5.
